Europäisches Patentamt

European Patent Office

Office européen des brevets

(19)

(11) **EP 1 533 804 A1**

(12) **EUROPEAN PATENT APPLICATION**

(43) Date of publication:
  **25.05.2005 Bulletin 2005/21**

(51) Int Cl.⁷: **G11B 9/08**, G11B 11/08

(21) Application number: **04027531.5**

(22) Date of filing: **19.11.2004**

(84) Designated Contracting States:
  **AT BE BG CH CY CZ DE DK EE ES FI FR GB GR
  HU IE IS IT LI LU MC NL PL PT RO SE SI SK TR**
  Designated Extension States:
  **AL HR LT LV MK YU**

(30) Priority: **21.11.2003 JP 2003392779**

(71) Applicants:
  • **Pioneer Corporation
    Meguro-ku, Tokyo (JP)**
  • **ESASHI, Masayoshi
    Sendai-shi, Miyagi-ken 982 (JP)**

(72) Inventors:
  • **Takahashi, Hirokazu c/o Pioneer Corporation
    Tsurugashima-shi Saitama (JP)**
  • **Ono, Takahito
    Sendai-shi Miyagi (JP)**
  • **Esashi, Masayoshi
    Sendai-shi Miyagi (JP)**

(74) Representative:
  **Reinhard - Skuhra - Weise & Partner GbR
  Postfach 44 01 51
  80750 München (DE)**

(54) **Recording / reproducing head, recording / reproducing head array, method of producing the same, and recording apparatus and reproducing apparatus**

(57)  A recording / reproducing head (100) for performing at least one of a record operation of recording information onto a dielectric recording medium and a reproduction operation of reproducing the information from the dielectric recording medium (20), the recording / reproducing head provided with: a support member (130) which extends in a longitudinal direction; and a projection portion (110) which is mounted on the support member such that a tip of the projection portion faces the dielectric recording medium, the support member having a rounded shape at a surface thereof on a side facing the dielectric recording medium, at least in a mounted portion on which the projection portion is mounted.

## FIG. 1A

EP 1 533 804 A1

# FIG. 26

TRACKING ERROR SIGNAL

TRACKING ERROR DETECTOR ~ 35

OUTPUT

SIGNAL DETECTOR

34

DEMODUL-ATOR ~ 30

OSCILLA-TOR ~ 13

23

24

14

21

RECORD SIGNAL GENERATOR

22

12

130

11

L

110

17

16

15

20

Cs

**Description**

BACKGROUND OF THE INVENTION

1. Field of the Invention

The present invention relates to a recording / reproducing head for recording and reproducing polarization information recorded on a dielectric substance, such as a ferroelectric recording medium, as well as a recording / reproducing head array, a method of producing the recording / reproducing head, and a recording apparatus and a reproducing apparatus which use the recording /reproducing head.

2. Description of the Related Art

A technique of a recording / reproducing apparatus which uses SNDM (Scanning Nonlinear Dielectric Microscopy) for nano-scale analysis of a dielectric recording medium is suggested by the inventors of the present invention. In SNDM, it is possible to increase its resolution associated with the measurement to sub nanometer resolution, by using an electric conductive cantilever (or probe) with a small probe mounted on its tip, which is used for AFM (Atomic Force Microscopy) or the like. Recently, the development of a super high density recording / reproducing apparatus has been advanced, wherein the apparatus records data onto a recording medium having a recording layer made of a ferroelectric material, by using the technique of SNDM (refer to Japanese Patent Application Laying Open NO. 2003-085969).

The recording / reproducing apparatus of this type which uses SNDM reproduces information by detecting a positive or negative direction of polarization of the recording medium. This is performed by using a change in an oscillation frequency of a LC oscillator, which includes (i) a high frequency feedback amplifier including an L component, (ii) a conductive probe mounted on this amplifier, and (iii) a capacitance Cs of the ferroelectric material under the probe, caused by a change $\Delta C$ in a small capacitance due to a non-linear dielectric constant which have origin in the distribution of the positive and negative of the polarization. Namely, it is performed by detecting the change in the distribution of the positive and negative of the polarization, as a change $\Delta f$ in the oscillation frequency.

Moreover, by applying an alternating electric field whose frequency is sufficiently low with respect to the oscillation frequency in order to detect a difference in the positive and negative of the polarization, the oscillation frequency is changed along with the alternating electric field, and the rate of change in the oscillation frequency including its sign is determined by the non-linear dielectric constant of the ferroelectric material under the probe. Then, by FM (Frequency Modulation)-demodulating and extracting a component due to the alternating electric field, from a high-frequency signal of the LC oscillator which is FM-modulated in accordance with the change in the small capacitance $\Delta C$ along with the application of the alternating electric field, the record information (data) recorded on the ferroelectric recording medium is reproduced.

SUMMARY OF THE INVENTION

The record and reproduction of the record information is performed by using the probe as a recording / reproducing head. The probe can be broadly classified into a projection portion of a needle shape and a support portion for supporting the projection portion. By applying an electric field to between the projection portion and the recording medium, the information is recorded and reproduced as described above.

It is desirable that the support portion plays a role as a path (i.e. electricity passage) of the electric field (or an electric current) applied to the projection portion. However, there is such a technical problem that the electric filed concentrates at the support portion (i.e. a part of the support portion), which causes the electric field to be applied to between the support portion and the recording medium. The generation of the electric field between the support portion and the recording medium as described above is a source of noise in the recording / reproducing apparatus which uses the principle of SNDM in which the information is reproduced by the application of the alternating electric field, and it is disadvantageous in the appropriate record and reproduction of the information, which is also a technical problem.

It is therefore an object of the present invention to provide a recording / reproducing head capable of inhibiting the generation of an unnecessary electric field, as well as a recording / reproducing head array, a method of producing the recording / reproducing head, and a recording apparatus and a reproducing apparatus which use the recording / reproducing head (or the recording / reproducing head array).

(Recording / Reproducing Head)

The above object of the present invention can be achieved by a first recording / reproducing head for performing at least one of a record operation of recording information onto a dielectric recording medium and a reproduction operation of reproducing the information from the dielectric recording medium, the recording / reproducing head provided with: a support member which extends in a longitudinal direction (e.g. in a longitudinal direction of the recording / reproducing head); and a projection portion which is mounted on the support member such that a tip of the projection portion faces the dielectric recording medium, the support member having a rounded shape at a surface thereof on a side facing the dielectric recording medium, at least in a mounted portion on which the projection portion is mounted.

According to the first recording / reproducing head of the present invention, it is possible to prevent the application (or the generation) of an unexpected electric field (or discharge), and it is possible to stabilize the operations of recording and reproducing the information by using a recording apparatus and a reproducing apparatus described later.

Specifically, the first recording / reproducing head of the present invention is provided with the support member which extends in the longitudinal direction of the recording / reproducing head. It is preferable to use a material having electric conductivity as the support member, but as described later, it is possible to select an appropriate material in accordance with a resonance frequency of a resonance circuit (in other words, an oscillation frequency of an oscillator) in a reproducing apparatus. Alternatively, by selecting an appropriate material, it is also possible to change a vibration frequency obtained when the recording / reproducing head is moved along the surface of the information recording medium, as occasion demands. The projection portion is mounted on the support member such that the tip of the projection portion faces the dielectric recording medium. The projection portion may be mounted upright on the support member. The projection portion is also preferably constructed from a material having electric conductivity.

In particular, the first recording / reproducing head of the present invention has a rounded shape at the surface thereof on the side facing the dielectric recording medium, at least in the mounted portion on which the projection portion is mounted out of the support member. The "mounted portion" is not rigorously limited to the portion to mount the projection portion on, but also includes surrounding area portions or vicinity area portions. The "rounded shape" in the present invention indicates a relatively rounded shape, as compared to the shape of a portion not facing the dielectric recording medium, as described later, or a shape obtained by a chamfer process, for example.

Because the surface of the support member is rounded as described above, for example, if the support member is used for a recording apparatus or a reproducing apparatus described later, it is possible to prevent the concentration of an electric field, which is possibly generated on the surface by that the electric field for the record and reproduction operations is supplied to the first recording /reproducing head.

If the surface has not the rounded shape but an angular part (e.g. the cross section of the support member has a square shape), an electric field concentrates at the angular part. In the extreme case, there is a possibility that an unexpected discharge is performed between the angular part and the dielectric recording medium. Such a discharge is undesirable in a recording apparatus and a reproducing apparatus which use SNDM, for example, for changing or detecting the polarization condition of the dielectric recording medium by applying an electric field to between the recording /reproducing head (especially, the projection portion of the recording /reproducing head) and the dielectric recording medium (or a return electrode).

However, the use of the first recording / reproducing head hardly causes the concentration of the electric field at the support member, which is advantageous. By this, if an electric field is applied to between the recording / reproducing head and the dielectric recording medium, it is possible to realize an appropriate discharge (i.e. the application of an electric field) between the projection portion and the dielectric recording medium. By preventing the concentration of the electric field at the support member, it is possible to inhibit or remove the generation (the application) of the unexpected electric field or the like between the support member and the dielectric recording medium (or a return electrode).

Consequently, according to the first recording / reproducing head of the present invention, it is possible to prevent the concentration of the electric field at the support member, and it is possible to effectively inhibit or remove the generation (the application) of the unexpected electric field (or the unexpected discharge) from the support member. Therefore, it is possible to inhibit a bad influence caused by the discharge, on the surrounding of the recording / reproducing head, to thereby increase the degree of freedom in a structure in the vicinity of the recording / reproducing head (e.g. the arrangement / positions of the recording / reproducing head, the return electrode, and a plurality of recording / reproducing heads, as described later).

Moreover, the support member and the projection portion may be formed in one body. Namely, even if the support member and the projection portion are formed from a single material, if the support member and the projection portion can be distinguished from a difference in their shapes, then, this aspect is included in the present invention.

Furthermore, from the viewpoint of effectively inhibiting or removing the unexpected discharge, the support member preferably has a rounded shape at the surface thereof on the side not facing the dielectric recording medium, in the mounted portion on which the projection portion is mounted. Alternatively, the entire part of the support member may be rounded.

In one aspect of the first recording / reproducing head of the present invention, the support member has a relatively rounded shape at the surface thereof on the side facing the dielectric recording medium, as compared with a shape at an another surface thereof on an another side not facing the dielectric recording medium, at least in the mounted portion on which the projection portion is mounted.

According to this aspect, it is possible to effectively prevent the unexpected discharge which is possibly performed between the support member and the dielectric recording medium, to thereby inhibit or remove the generation (the application) of the unexpected electric field or the like.

In another aspect of the first recording / reproducing head of the present invention, the support member has a prism shape obtained by a chamfer process with respect to corners thereof on the side facing the dielectric recording medium, at least in the mounted portion on which the projection portion is mounted.

According to this aspect, the corners or angular parts are chamfered (e.g. the corners or angular parts are removed by grinding process, polishing process, peeling-off process, or the like), so that it is possible to effectively prevent the concentration of the electric field at the portion which is used to be the corner, to thereby inhibit or remove the generation (the application) of the unexpected electric field or the like.

In another aspect of the first recording / reproducing head of the present invention, the support member has a rounded shape at a surface thereof on an opposite side to the side facing the dielectric recording medium, or has a prism shape obtained by a chamfer process with respect to corners thereof on the opposite side, at least in the mounted portion on which the projection portion is mounted.

In another aspect of the first recording / reproducing head of the present invention, if a distance between the support member and the dielectric recording medium is h, a radius of the rounded shape is greater than or equal to h/10.

According to this aspect, by realizing the shape rounded enough to satisfy the above condition, it is possible to effectively prevent the unexpected discharge caused by the concentration of the electric field.

Even if the portion having the rounded shape is not simple rounded shape (e.g. the rounded shape is merely smooth surface or the rounded shape is not a pure sphere shape / a pure circle shape) and the radius thereof cannot be easily evoked or expressed, if the above condition is satisfied in full consideration of the curvature of such a smooth surface or the like, the radius thereof in the case where the smooth surface or the like is regarded as a circular arc, and the like, it is obvious that this aspect is included in the scope of the present invention.

The above object of the present invention can be also achieved by a second recording / reproducing head for performing at least one of a record operation of recording information onto a dielectric recording medium and a reproduction operation of reproducing the information from the dielectric recording medium, the recording /reproducing head provided with: a support member which extends in a longitudinal direction; and a projection portion which is mounted on the support member such that a tip of the projection portion faces the dielectric recording medium, the support member having a relatively rounded shape at a mounted portion on which the projection portion is mounted, as compared with a shape at an other portion of the support member except the mounted portion.

According to the second recording / reproducing head of the present invention, it is possible to receive the same benefits as those of the first recording / reproducing head of the present invention. Particularly, in the second recording / reproducing head, the mounted portion, on which the projection portion is mounted, is relatively rounded, as compared to the other portion on which the projection portion is not mounted. For example, the mounted portion (particularly, its planar shape) may be rounded, and the other portion, on which the projection portion is mounted, may be rectangular. Even with such a shape, at least in the mounted portion, it is possible to prevent the concentration of the electric field at the support member, to thereby inhibit or remove the generation (the application) of the unexpected electric field or the like.

Consequently, according to the second recording / reproducing head, it is possible to receive the same benefits as those of the first recording / reproducing head described above.

In one aspect of the second recording / reproducing head of the present invention, the support member has a prism shape obtained by a chamfer process with respect to corners thereof, in the mounted portion on which the projection portion is mounted.

According to this aspect, the corners or angular parts are chamfered (e.g. the corners or angular parts are removed by grinding process, polishing process, peeling-off process, or the like), so that it is possible to effectively prevent the concentration of the electric field at the portion which is used to be the corner, to thereby inhibit or remove the generation (the application) of the unexpected electric field or the like.

The above object of the present invention can be also achieved by a third recording / reproducing head for performing at least one of a record operation of recording information onto a dielectric recording medium and a reproduction operation of reproducing the information from the dielectric recording medium, the recording /reproducing head provided with: a support member which extends in a longitudinal direction; and a projection portion which is mounted on the support member such that a tip of the projection portion faces the dielectric recording medium, the support member having a rounded shape at an inhibition portion where application (i.e. generation) of an electric field between the support member and the dielectric recording medium is to be inhibited.

According to the third recording / reproducing head of the present invention, as in the first and second recording / reproducing head of the present invention described above, it is possible to prevent the concentration of the electric field at the support member, and it is possible to effectively inhibit or remove the generation (the application) of the unexpected electric field or the like from the support member.

Particularly, in the third recording / reproducing head, out of the support member, the inhibition portion where the generation (the application) of the electric field (particularly, the unexpected electric field) is to be inhibited, is rounded. Namely, by making the portion where the generation (the application) of the electric field is undesirable have a rounded shape, out of the support member, it is possible to effectively inhibit the generation (the application) of the unexpected electric field, which is advantageous. As the inhibition portion where the generation (the application) of the electric field is to be inhibited, the following is conceivable: the surface of the support member on the side facing the dielectric recording medium, the surface thereof on the side facing the return electrode, the surface thereof on the side facing adjacent recording / reproducing heads in the case of a recording / reproducing head array having a plurality of recording / reproducing heads, as described later.

Consequently, according to the third recording / reproducing head, it is possible to receive the same benefits as those of the first and second recording / reproducing heads described above.

Incidentally, even in the third recording / reproducing head, as with the first and second recording / reproducing heads described above, the inhibition portion where the generation (the application) of the electric field is to be inhibited may be relatively rounded, as compared to the other portion where the generation (the application) of the electric field is not to be inhibited, or may be rounded by performing the chamfer process.

In one aspect of the third recording / reproducing head of the present invention, the inhibition portion includes a surface of the support member on a side facing the dielectric recording medium.

According to this aspect, as described above, it is possible to effectively prevent the unexpected discharge between the support member and the dielectric recording medium.

In another aspect of the third recording / reproducing head of the present invention, the inhibition portion includes a surface of the support member on a side facing a return electrode, a high-frequency electric field being applied between the return electrode and the recording / reproducing head.

According to this aspect, it is possible to effectively prevent an unexpected electric field between the support member and the return electrode. Therefore, this increases the degree of freedom in the structure of the recording / reproducing head, such as placing the return electrode in the vicinity of the recording / reproducing head, which is advantageous. Incidentally, the return electrode will be described in detail in the preferred embodiments later.

In another aspect of the third recording / reproducing head of the present invention, if a distance between (i) the support member and (ii) a portion where the electric field is possibly applied to between the support member is h, a radius of the rounded shape is greater than or equal to h/10.

According to this aspect, by realizing the shape rounded enough to satisfy the above condition, it is possible to effectively prevent the generation (the application) of the unexpected electric filed or the like caused by the concentration of the electric field.

The above object of the present invention can be also achieved by a recording / reproducing head array provided with: a plurality of first, second, or third recording / reproducing heads described above (including their various aspects), the support member further having the rounded shape at a surface thereof on a side facing adjacent recording / reproducing head / heads.

According to the recording / reproducing head array of the present invention, even if the plurality of recording / reproducing heads are provided, it is possible to effectively prevent an unexpected discharge between the adjacent recording / reproducing heads. Therefore, it is possible to prevent the generation of noise, such as crosstalk, between the adjacent recording / reproducing heads, which enables a recording apparatus and a reproducing apparatus described above to perform the record and reproduction operations with stability. In addition, there is such an advantage that the plurality of recording / reproducing heads can be arranged densely, to thereby increase the degree of freedom in its structure.

(Production Method)

The above object of the present invention can be also achieved by a production method of producing the above-described first, second, or third recording / reproducing head (including their various aspects), the production method provided with: a mold-forming process of forming a mold for forming the projection portion and the support member; and a member-forming process of forming the projection portion and the support member by using the formed mold, the mold being formed such that, out of the mold, a portion for forming the support member has a shape corresponding to the rounded shape, in the mold-forming process.

According to the production method of the present invention, it is possible to the above-described first, second, or third recording /reproducing head of the present invention relatively easily.

Specifically, at first, in the mold-forming process, the mold for forming the recording / reproducing head is formed. Here, it is possible to form the mold by combining various processes, such as patterning by a resist and etching or the like. Particularly in the present invention, such a mold that can form the support member having a rounded shape is formed in advance, in accordance with the shape of the support member. Therefore, there is such an advantage that it is unnecessary to introduce a special process in the subsequent member-forming process. In order to form the mold having such a shape, isotropic etching may be performed, or mask patterning or the like, which realizes such a shape, may be used, as described above, for example.

Then, in the member-forming process, the projection portion and the support member are formed. Here, they can be formed by using a film formation method (or a film growth method) or the like. Since the mold is formed in advance such that the surface of the support member will be rounded in the mold-forming process, it is possible to produce the above-described first, second, or third recoding / reproducing head of the present invention, relatively easily, without using a special method in the member-forming process.

Consequently, according to the production method of the present invention, it is possible to produce the above-described first, second, or third recoding / reproducing head of the present invention efficiently and relatively easily.

Incidentally, the production method of the present invention can take various aspects in association with the various aspect of the first, second, or third recording / reproducing head of the present invention.

Moreover, if the above-descried recording / reproducing head array is produced, the same production method can be used.

In one aspect of the production method of the present invention, the mold having the shape corresponding to the rounded shape is formed by performing isotropic etching in the mold-forming process.

According to this aspect, by using the properties of the isotropic etching, it is possible to form the mold having the shape corresponding to the rounded shape (i.e. the mold for forming the support member having the rounded shape) relatively easily. Therefore, it is possible to form the surface that is associated with the rounded shape, of the above-described first, second, or third recording / reproducing head, for example. In particular, the first, second, or third recording / reproducing head is produced in size on the order of nanometers, so that it is difficult to realize such a shape by mechanical grinding process or polishing process or the like, and it is also expensive. However, according to this aspect, by effectively use the properties of the isotropic etching, it is possible to realize such a shape easily.

In another aspect of the production method of the present invention, the mold having the shape corresponding to the rounded shape is formed by rounding a masking shape of a photoresist in the mold-forming process.

According to this aspect, it is possible to reproduce the recording / reproducing head provided with the support member having the rounded shape, as occasion demands, relatively easily, in accordance with the patterning of the photoresist.

In another aspect of the production method of the present invention, the mold, having a portion for forming the projection portion, is formed by using a silicon (100) substrate as the mold and by performing anisotropic etching with respect to the silicon substrate, in the mold-forming process.

The silicon substrate has such a characteristic that an etching rate differs between the (100) surface and the (111) surface thereof, because of a difference in interatomic bonds in the crystal lattice surfaces of the (100) surface and the (111) surface. Therefore, according to this aspect, it is possible to form the mold in the projective shape (or in a pyramid-shape), which is required for the formation of the projection portion, by performing the anisotropic etching using such a characteristic, in the mold-forming process. Then, the use of the mold allows the formation of the projection portion, relatively easily, in the member-forming process.

Incidentally, not only the silicon substrate but also a materials having the above-described characteristic can be used as the mold in place of the silicon substrate.

In another aspect of the production method of the present invention, the support member having the rounded shape is formed by ion irradiation, in the member-forming process.

According to this aspect, for example, a Focused Ion Beam (FIB) is used to cut, peal off, grind or polish an angular surface, to thereby allow the relatively easy production of the support member having the rounded shape.

(Recording Apparatus)

The above object of the present invention can be also achieved by a recording apparatus for recording information onto a dielectric recording medium, the recording apparatus provided with: the above-described first, second, or third recording / reproducing head (including its various aspects); and a record signal generating device for generating a record signal corresponding to the information.

According to the recording apparatus of the present invention, it is possible to record the data on the basis of the record signal generated by the recording signal generating device, while taking advantage of the above-described first, second, or third recording /reproducing head of the present invention. Namely, it is possible to prevent the rewriting of the data by the generation (the application) of the unexpected electric field or the like, as described above, and prevent the superimposition of noise to the record signal, or the like. As a result, it is possible to appropriately apply the electric field corresponding to the record signal to the dielectric recoding medium. Therefore, there is such a great advantage that it is possible to record the data with more stability.

(Reproducing Apparatus)

The above object of the present invention can be also achieved by a reproducing apparatus for reproducing information recorded on a dielectric recording medium, the reproducing apparatus provided with: the above-described first, second, or third recording /reproducing head (including its various aspects); an electric field applying device for applying an electric field to the dielectric recording medium; an oscillating device whose oscillation frequency varies depending on a difference in a capacitance corresponding to a non-linear dielectric constant of the dielectric recording medium; and a reproducing device for demodulating and reproducing an oscillation signal from the oscillating device.

According to the reproducing apparatus of the present invention, by applying an electric field to the dielectric recording medium by using the electric filed applying device, the oscillation frequency of the oscillating device is changed, due to a change in the capacitance corresponding to a change in the non-linear dielectric constant of the dielectric recording medium. Then, the oscillation signal corresponding to the change in the oscillation frequency of the oscillating device is demodulated and reproduced by the reproducing device, to thereby reproduce the data.

Particularly in the present invention, the data can be reproduced by taking advantage of the above-described first, second, or third recording / reproducing head of the present invention. Namely, it is possible to prevent the change in the oscillation frequency by the generation (the application) of the unexpected electric field or the like, as described above, and prevent the superimposition of noise to the oscillation signal, or the like. Therefore, there is such a great advantage that it is possible to reproduce the data with more stability.

The nature, utility, and further features of this invention will be more clearly apparent from the following detailed description with reference to preferred embodiment of the invention when read in conjunction with the accompanying drawings briefly described below.

As explained above, the first recording / reproducing head of the present invention is provided with the support member and the projection portion, and the support member has a rounded shape at the surface thereof on the side facing the dielectric recording medium, in the mounted portion on which the projection portion is mounted. The second recording / reproducing head of the present invention is provided with the support member and the projection portion, and the support member has a relatively rounded shape at the mounted portion on which the projection portion is mounted, as compared to the shape at the other portion on which the projection portion is not mounted. The third recording / reproducing head of the present invention is provided with the support member and the projection portion, and the support member has a rounded shape at the inhibition portion where the generation (the application) of an electric field is to be inhibited, out of the support member. Therefore, it is possible to prevent the concentration of the electric field at the support member, and it is also possible to effectively inhibit or remove the generation (the application) of the unexpected electric field (or the unexpected discharge) from the support member.

Moreover, the production method of the present invention is provided with the mold-forming process and the member-forming process. Therefore, it is possible to produce the first, second, or third recording / reproducing head of the present relatively easily and efficiently.

Moreover, the recording apparatus of the present invention is provided with the first, second, or third recording / reproducing head of the present invention and the record signal generating device. Therefore, it is possible to receive various benefits owned by the first, second, or third recording / reproducing head of the present invention, and thus, it is possible to record the data with more stability.

Furthermore, the reproducing apparatus of the present invention is provided with: the first, second, or third recording /reproducing head; the electric field applying device; the oscillating device; and the reproducing device. Therefore, it is possible to receive various benefits owned by the first, second, or third recording / reproducing head of the present invention, and thus, it is possible to reproduce the data with more stability.

BRIEF DESCRIPTION OF THE DRAWINGS

FIG. 1A and FIG. 1B are cross sectional views, side views, and plan views, conceptually showing one specific example of a recording / reproducing head in an embodiment of the present invention;

FIG. 2A and FIG. 2B are cross sectional views, side views, and plan views, conceptually showing another specific example of the recording / reproducing head in the embodiment of the present invention;

FIG. 3 is a cross sectional view conceptually showing a size of the recording / reproducing head in the embodiment of the present invention;

FIG. 4 is a perspective view conceptually showing one process of a production method for the recording / reproducing head in the embodiment of the present invention;

FIG. 5 is a cross sectional view conceptually showing another process of the production method for the recording / reproducing head in the embodiment of the present invention;

FIG. 6A and FIG. 6B are a cross sectional view and a plan view, respectively, conceptually showing another process of the production method for the recording / reproducing head in the embodiment of the present invention;

FIG. 7A and FIG. 7B are a cross sectional view and a plan view, respectively, conceptually showing another process of the production method for the recording / reproducing head in the embodiment of the present invention;

FIG. 8A and FIG. 8B are cross sectional views, conceptually showing another process of the production method for the recording /reproducing head in the embodiment of the present invention;

FIG. 9A and FIG. 9B are cross sectional views, conceptually showing another process of the production method for the recording /reproducing head in the embodiment of the present invention;

FIG. 10A and FIG. 10B are cross sectional views, conceptually showing another process of the production method for the recording /reproducing head in the embodiment of the present invention;

FIG. 11A and FIG. 11B are cross sectional views, conceptually showing another process of the production method for the recording /reproducing head in the embodiment of the present invention;

FIG. 12A and FIG. 12B are cross sectional views, conceptually showing another process of the production method for the recording /reproducing head in the embodiment of the present invention;

FIG. 13A and FIG. 13B are cross sectional views, conceptually showing another process of the production method for the recording /reproducing head in the embodiment of the present invention;

FIG. 14A and FIG. 14B are cross sectional views, conceptually showing another process of the production method for the recording /reproducing head in the embodiment of the present invention;

FIG. 15A and FIG. 15B are cross sectional views, conceptually showing another process of the production method for the recording /reproducing head in the embodiment of the present invention;

FIG. 16A and FIG. 16B are cross sectional views, conceptually showing another process of the production method for the recording /reproducing head in the embodiment of the present invention;

FIG. 17A and FIG. 17B are cross sectional views, conceptually showing another process of the production method for the recording / reproducing head in the embodiment of the present invention;

FIG. 18A and FIG. 18B are cross sectional views, conceptually showing another process of the production method for the recording /reproducing head in the embodiment of the present invention;

FIG. 19A and FIG. 19B are cross sectional view and plan view, conceptually showing another process of the production method for the recording / reproducing head in the embodiment of the present invention;

FIG. 20A and FIG. 20B are cross sectional views, conceptually showing another process of the production method for the recording /reproducing head in the embodiment of the present invention;

FIG. 21A and FIG. 21B are cross sectional views, conceptually showing another process of the production method for the recording /reproducing head in the embodiment of the present invention;

FIG. 22 is a cross sectional view, conceptually showing another process of the production method for the recording /reproducing head in the embodiment of the present invention;

FIG. 23A and FIG. 23B are a perspective view and a plan view, respectively, conceptually showing one modification example of the recording / reproducing head in the embodiment of the present invention;

FIG. 24A and FIG. 24B are a perspective view and a plan view, respectively, conceptually showing another modification example of the recording / reproducing head in the embodiment of the present invention;

FIG. 25A and FIG. 25B are a perspective view and a plan view, respectively, conceptually showing another modification example of the recording / reproducing head in the embodiment of the present invention;

FIG. 26 is a block diagram conceptually showing a basic structure of a dielectric recording / reproducing apparatus in an embodiment which adopts the recording / reproducing head in the embodiment of the present invention;

FIG. 27A and FIG. 27B are an explanatory diagram and a cross sectional view, respectively, conceptually showing a dielectric recording medium used for information reproduction on the dielectric recording / reproducing apparatus in the embodiment;

FIG. 28 is a cross sectional view conceptually showing a record operation of the dielectric recording / reproducing apparatus in the embodiment;

FIG. 29 is a cross sectional view conceptually showing a reproduction operation of the dielectric recording / reproducing apparatus in the embodiment; and

FIG. 30A and FIG. 30B are cross sectional views conceptually showing one example of a state of discharge from a probe, in the dielectric recording / reproducing apparatuses in the embodiment and in the comparison.

DETAILED DESCRIPTION OF THE PREFERRED EMBODIMENTS

Embodiments of the present invention will be hereinafter explained with reference to the drawings.

(1) Embodiment of Recording / Reproducing Head

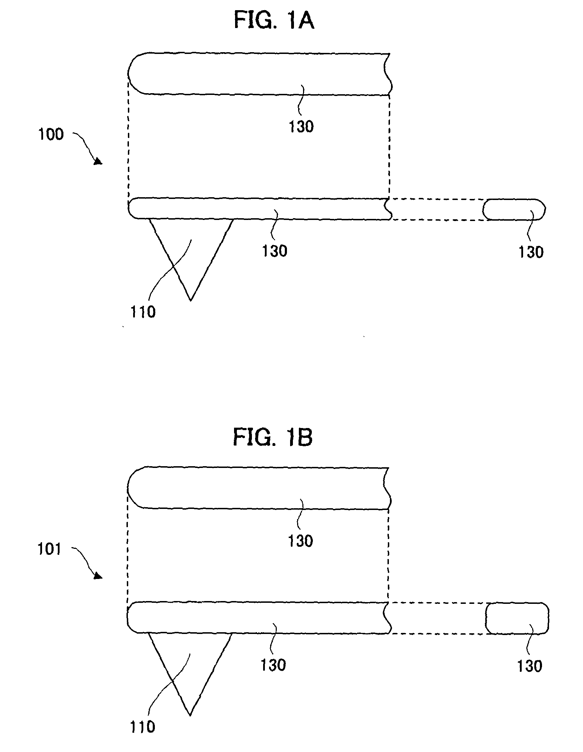

At first, with reference to FIGs. 1 to FIGs. 25, the embodiment of the recording / reproducing head of the present invention will be explained.

(i) Structure of Recording / Reproducing Head

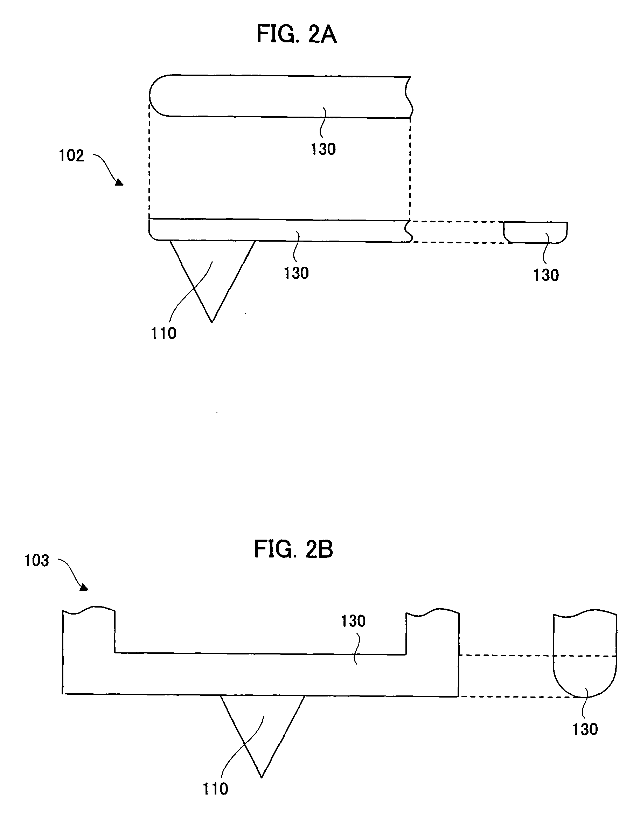

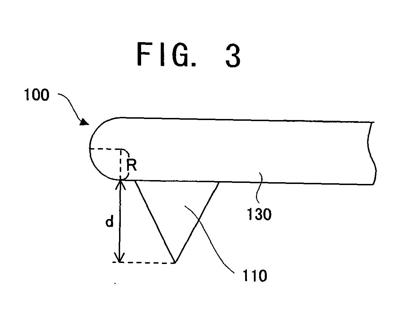

At first, with reference to FIGs. 1 to FIG. 3, the structure of the recording / reproducing head in the embodiment (i.e. its basic structure) will be explained. FIG. 1A and FIG. 1B conceptually show one specific example of the structure of the recording /reproducing head in the embodiment. FIG. 2A and FIG. 2B conceptually show another specific example of the structure of the recording / reproducing head in the embodiment. FIG. 3 conceptually shows a relationship of the size of the recording /reproducing head in the embodiment.

As shown in the view on the lower left of FIG. 1A, a recording /reproducing head 100 in the embodiment is provided with: a projection portion 110; and a support member 130.

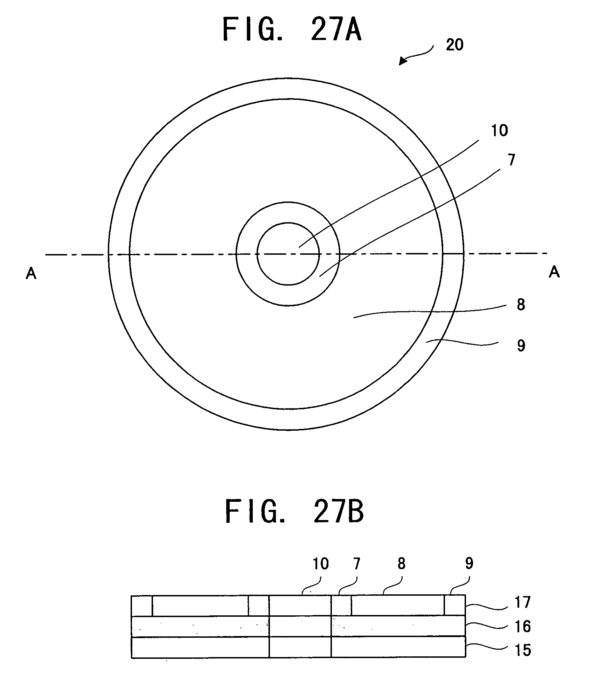

The projection portion 110 has a narrowed and pointed tip so that an electric field is applied to a dielectric recoding medium 20 as described later (refer to FIG. 27) from the tip side in the record /reproduction operations of the recording / reproducing head 100. In particular, the projection portion 110 preferably has electric conductivity, obtained by doping boron or the like to diamond at the time of production. Moreover, not only diamond, but also a material having electric conductivity, such as boron nitride, can be used. However, the projection portion 110 is preferably constructed by using a harder material because it could contact the dielectric recording medium 20. The tip portion of the projection portion 110 is a significant factor to determine the radius of the polarization formed correspondingly to the record data recorded onto the dielectric recording medium 20 as described later. Thus, out of the tip portion, particularly, the size of a portion which directly contacts the dielectric recording medium 20 is preferably extremely small. For example the radius of the portion which directly contacts the dielectric recording medium 20 is on the order of 10 nm.

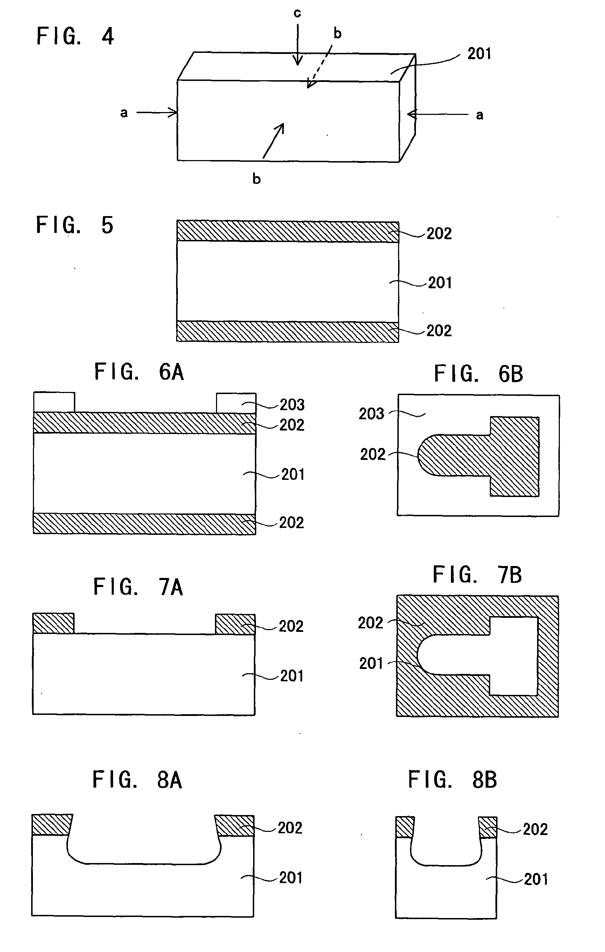

The support member 130 is a base for supporting the recording / reproducing head 100. The support member 130 has electric conductivity as with the projection portion 110. Moreover, as described later, the support member 130 and the projection portion 110 may be formed in one body (refer to FIG. 4 etc.).

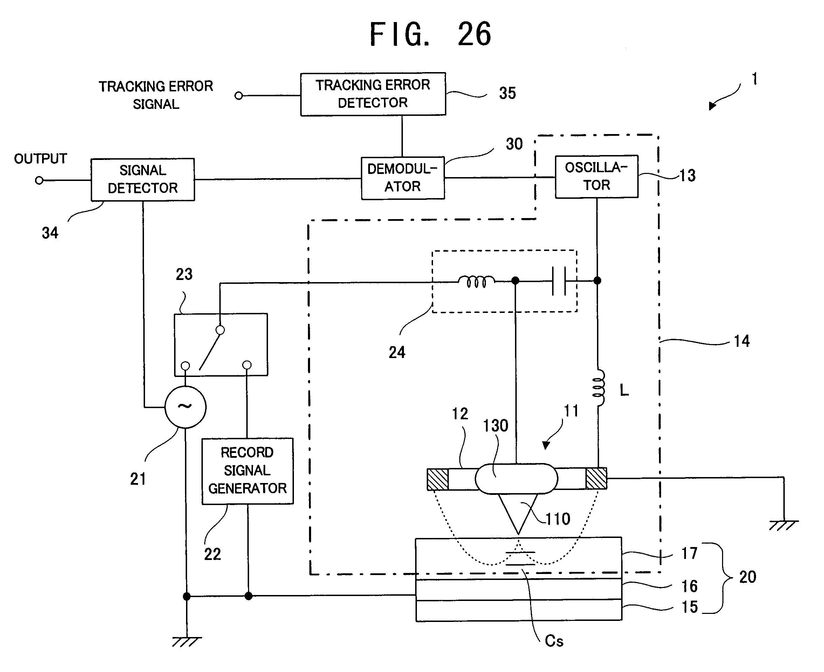

Furthermore, as described later, the projection portion 110 and the support member 130 constitute a part of a resonance circuit 14 in the reproduction operation as a part of a probe 11 (refer to FIG. 26). Thus, it is possible to select their materials according to the inductance of the projection portion 110 and the support member 130 so as to obtain a desired resonance frequency (oscillation frequency). Moreover, by selecting the material in this manner, it is also possible to change the vibration frequency of the probe 11, as occasion demands.

Particularly in the embodiment, the end portion (i.e. the tip portion) of the support member 130 is rounded. Namely, as shown in the view on the upper left of FIG. 1A (the view in which the recording / reproducing head 100 is observed from the top side, i.e. the side of the support member 130), there is not any angular part on the end portion of the support member 130.

In addition, as shown in the view on the lower right of FIG. 1A (the cross sectional view of the support member 130), there is not any angular part on the cross section of the support member 130. Namely, the support member 130 has such a shape that there is not any angular part over its entire surface.

If the support member 130 has an angular part (e.g. if the support member 130 has a rectangular shape on its cross section), an electric field concentrates at the angular part. In the extreme case, there is a possibility that an unexpected electric field (or discharge) is generated (applied) between the angular part and the dielectric recording medium 20. This is caused by the characteristic that the electric field can leak to the outside of the conductor at the portion where the electric field concentrates. Such an unexpected electric field or the like is undesirable in a dielectric recording / reproducing apparatus 1 described later (refer to FIG. 26), which uses SNDM, for example, for detecting the polarization condition of the dielectric recording medium 20 by applying an electric field to between the recording / reproducing head 100 and the dielectric recording medium 20 (or a return electrode 12).

However, in the embodiment, the support member 130 does not have an angular part but has a rounded shape, to thereby give such an advantage that it is possible to prevent the concentration of an electric field at the support member 130. By this, if an electric field is applied to between the recording / reproducing head 100 and the dielectric recording medium 20, it is possible to realize an appropriate discharge (i.e. the appropriate application of an electric field) between the projection portion 110 and the dielectric recording medium 20 (or the return electrode 12). By preventing the concentration of the electric field at the support member 130, it is possible to inhibit or remove the application (the generation) of the unexpected electric field or the like between the support member 130 and the dielectric recording medium 20 (or the return electrode 12).

Moreover, as shown in FIG. 1B, if not the entire portion of the support member 130 but the angular parts or corners thereof are rounded, the other portion except the angular parts (i.e. the surface portions of the support member 130) is not necessarily rounded. Even such a recording / reproducing head 101 can receive the above-described various benefits.

As shown in FIG. 2A, out of the support member 130, a surface on the side facing the dielectric recording medium 20 may be rounded. Namely, from the viewpoint of preventing the concentration of the electric field and further preventing the application of the unexpected electric field or the like, as described above, it is enough if there is not any angular part in a portion where the unexpected electric field is possibly applied between the support member 130 and the dielectric recording medium 20 (or the return electrode 12). In other words, it is enough if the portion where the concentration of the electric field or the generation of the unexpected discharge is to be inhibited may have a rounded shape. Therefore, out of the support member 130, even if there is an angular part on the side not-facing the dielectric recording medium 20 (i.e. on the side where the projection portion 110 is not formed), it is possible to inhibit or remove the application of the unexpected electric field or the like, which is an obstacle to the record / reproduction operations.

It is also possible to prevent an unexpected discharge between the support member 130 and a return electrode 12 described later (refer to FIG. 26). Therefore, it is possible to appropriately form the resonance circuit 14 (refer to FIG. 26), to thereby allow the appropriate reproduction of polarization information recorded in the dielectric recording medium 20. Preventing the application of an unexpected electric field between the support member 130 and the return electrode 12 increases the degree of freedom in determining the arrangement / position of the return electrode 12 or the like. For example, it is possible to place the return electrode 12 closer to the recording / reproducing head 100. This has such an advantage that it is possible to further prevent noise, such as floating capacitance, from entering the resonance circuit 14. Incidentally, the support member 130 in this case is preferably shaped such that there is not an angular part on its surface on the side facing the return electrode 12.

Moreover, even if the projection portion 110 is not formed on one end portion of the support member 130, the projection portion 110 may be formed at a predetermined position of the support member 130 as shown in FIG. 2B. Even such a recording /reproducing head 103 can receive the above-described various benefits.

Now, the size of the rounded shape of the support member 130 (e.g. the radius of the rounded shape or the like) will be explained with reference to FIG. 3, with the radius of the rounded shape as an example.

As shown in FIG. 3, it is assumed that the distance between the support member 130 and the dielectric recording medium 20 is d. In this case, if the recording / reproducing head 100, in the condition that the support member 130 is substantially parallel to the recording surface of the dielectric recording medium 20, contacts the dielectric recording medium 20 to perform the record and reproduction operations, the distance d corresponds to the height of the projection portion 110. Then, under the assumption that the radius of the rounded shape of the support member 130 is R, it is preferable that $R \geqq d/10$.

If the support member 130 has the shape rounded enough to satisfy this condition, it is possible to effectively prevent the concentration of the electric field at the support member 130, and it is possible to inhibit or remove the unexpected discharge from the support member 130 to the dielectric recording medium 20 or the return electrode 12. As a result, it is possible to appropriately perform the record and reproduction operations by using the recording / reproducing head 100 in the embodiment.

Even if the portion having the rounded shape in the recording / reproducing head 100 is a merely smooth surface and the radius thereof cannot be easily evoked or expressed, if the above condition is satisfied in full consideration of the curvature of such a smooth surface, the radius thereof in the case where the smooth surface is regarded as a circular arc, and the like, it is obvious that this aspect is included in the scope of the present invention.

It is also conceivable to improve a record speed and a reproduction speed by using a plurality of recording / reproducing heads 100. In such a case, it is possible to inhibit or remove the application of an unexpected electric field or the like which is possibly applied between the adjacent recording / reproducing heads 100, or the like, in addition to receiving the above-described various benefits. Therefore, it is possible to remove a noise source, such as crosstalk, which disturbs the information record and reproduction operations, to thereby allow the appropriate record and reproduction of the information. By this, it is possible to increase the degree of freedom in determining the arrangement / position of each of the plurality of recording / reproducing heads 100. For example, if the recording / reproducing heads 100 can be arranged densely, it is possible to increase a data mount which can be recorded and reproduced per unit time, to thereby improve the record speed and the reproduction speed of the dielectric recording / reproducing apparatus described later.

Even if the condition of $R \geqq d/10$ is not satisfied, but if the support member 130 has a significantly or properly rounded shape, then, it is possible to significantly prevent the concentration of the electric field at the support member 130, and it is possible to properly inhibit the application of the unexpected electric field or the like.

(ii) Production Method for Recording / Reproducing Head

Next, with reference to FIG. 4 to FIG. 22, the production method for the recording / reproducing head in the embodiment will be explained. FIG. 4 to FIG. 22 conceptually show each process of the production method for the recording / reproducing head in the embodiment.

Incidentally, the recording / reproducing head produced in the production method explained here has the projection portion 110 and the support member 130 which are unified. However, even if the projection portion 110 and the support member 130 are not unified, the recording / reproducing head can be produced in the same production method, and it is obvious that such a production method is also included in the scope of the present invention.

At first, as shown in FIG. 4, a silicon substrate 201 is prepared. The silicon substrate 201 mainly becomes a mold for the recording /reproducing head. Incidentally, it is preferable to prepare such a silicon substrate 201 that a silicon dioxide film is formed along (or in parallel with) its (100) surface in a crystal lattice structure in a later process. This is, as described later, to form the projective (or pyramid-like) shape of the projection portion 110 by performing anisotropic etching. The silicon substrate 201 is referred to as a (100) substrate.

Incidentally, the explanation below goes on with reference to mainly a-a cross sectional views in FIG. 4, as well as b-b cross sectional views and plan views viewed from a direction c (i.e. plan views of the silicon substrate 201 viewed from its top side).

Then, as shown in FIG. 5, silicon dioxide (SiO$_2$) films 202 are formed with respect to a front surface (or an upper surface in FIG. 5) and back surface (or a downside surface in FIG. 5) of the silicon substrate 201. In this case, the silicon dioxide films 202 may be formed on the surfaces by providing the silicon substrate 201 under an oxidizing atmosphere at high temperature.

Then, as shown in FIG. 6A, a photoresist 203 is coated by spin coating method, for example, and patterning is performed. Specifically, after the photoresist 203 is coated onto the silicon dioxide film 202 formed on one of the surfaces of the silicon substrate 201, ultraviolet rays or the like are irradiated thereon with a photo mask in which a portion corresponding to the projective portion 110 is patterned. Then, by developing it, the patterning of the photoresist 203 is performed as shown in FIG. 6A.

Incidentally, FIG. 6B shows the silicon substrate 201 etc. in FIG. 6A viewed from the direction c (i.e. from the side where the photoresist 203 is patterned). As shown in FIG. 6B, in the portion where the projection portion 110 and the support member 130 of the recording /reproducing head 100 will be formed later, a window (or space portion) at which the photoresist 203 is not coated can be seen. The projection portion 110 and the support member 130 will be formed later in accordance with the shape of this window.

Incidentally, as shown in FIG. 6B, in order to make the support member 130 having such a shape that there is not an angular part on the end portion, the photoresist 203 is patterned by using a photo mask for making the end portion rounded.

Then, as shown in FIG. 7A, etching is performed with respect to the silicon substrate 201 in which the photoresist 203 is patterned as shown in FIGs. 6. Here, for example, BHF (Buffered HydroFluoric acid) or the like is used to perform the etching with respect to the portion where the photoresist 203 is not coated out of the silicon dioxide film 202. However, other etchant may be used for the etching, or dry etching may be performed for the etching.

After the etching of the silicon dioxide film 202, the photoresist 203 is removed. Here, the removal of the photoresist 203 may be performed by dry etching or wet etching.

FIG. 7B shows the silicon substrate 201 etc. in FIG. 7A viewed from the direction c. As shown in FIG. 7B, in the portion where the projection portion 110 will be formed later, a window at which the silicon dioxide film 202 is not coated can be seen, and the silicon substrate 201 can be seen at the window.

Then, as shown in FIG. 8A, isotropic etching is performed with respect to the silicon substrate 201. Here, for example, the isotropic etching is performed by dry etching which uses Xenon Difluoride (XeF$_2$) gas or the like, for example. Other gases may be used for the isotropic etching, or wet etching may be performed for the isotropic etching.

As described above, by the isotropic etching, the silicon substrate 201 is etched to be a rounded mold. By using the mold of the silicon substrate 201 etched in this manner, it is possible to produce the recording / reproducing head having the shape as shown in FIGs. 1 and FIGs. 2.

Moreover, in order to realize the rounded shape on the end portion on the top side of the support member 130, as with the recording / reproducing head 100 shown in FIGs. 1, a Focused Ion Beam (FIB) is preferably used, for example.

FIG. 8B is a b-b cross sectional view of the silicon substrate 201 shown in FIG. 8A. As shown in FIG. 8B, even in the b-b cross sectional view, the silicon substrate 201 is etched to be the rounded mold.

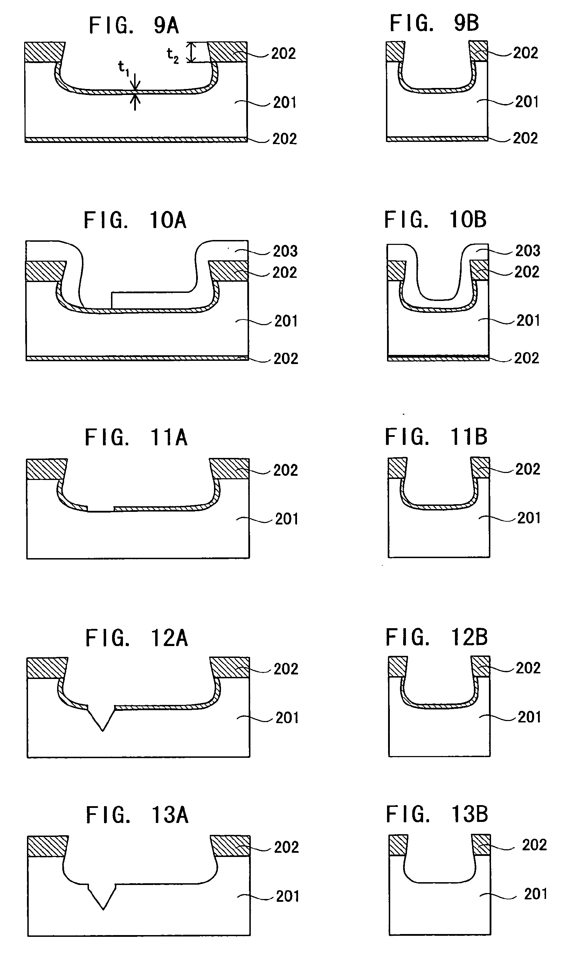

Then, as shown in FIG. 9A, the silicon substrate 201 is again oxidized, to thereby form the silicon dioxide films 202 on its surfaces. Here, as in the explanation in FIG. 5, the silicon dioxide films 202 may be formed on the surfaces by providing the silicon substrate 201 under an oxidizing atmosphere at high temperature.

Incidentally, out of the silicon substrate 201, a thickness (t1) of the silicon dioxide film 202 formed on the surface of the portion which is bored by the isotropic etching is thinner than a thickness (t2) of the silicon dioxide film 202 formed in the process in FIG. 5. Namely, the silicon substrate 201 is oxidized such that t1<t2 is valid. Therefore, quick oxidization is preferable to the silicon substrate 201 in the process shown in FIGs. 9.

Incidentally, FIG. 9B is a b-b cross sectional view of the silicon substrate 201 etc. shown in FIG. 9A. As shown in FIG. 9B, the silicon dioxide films 202 are formed on the silicon substrate 201.

Then, as shown in FIG. 10A, the photoresist 203 is coated again for patterning. At this time, the phtoresist 203 is patterned except the portion where the projection portion 110 will be formed.

Incidentally, FIG. 10B is a b-b cross sectional view of the silicon substrate 201 etc. shown in FIG. 10A. As shown in FIG. 10B, the portion of the silicon substrate 201 which will not be the mold of the projection portion 110 is covered with the photoresist 203, and the photoresist 203 is not formed in the portion of the silicon substrate 201 which will be the mold of the projection portion 110.

Then, as shown in FIG. 11A, etching is performed with respect to the silicon dioxide film 202 in accordance with the patterning of the photoresist 203 as shown in FIGs. 10, and then, the photoresist 203 is removed. The etching here is performed in the same procedure as that in FIGS. 7.

Incidentally, FIG. 11B is a b-b cross sectional view of the silicon substrate 201 etc. shown in FIG. 11A. As shown in FIG. 11B, the silicon dioxide film 202 in the portion where the projection portion 110 will not be formed is not etched and remains on the silicon substrate 201. The silicon dioxide film 202 in the portion where the projection portion 110 is formed is etched in accordance with the patterning of the photoresist 203.

Then, as shown in FIG. 12A, anisotropic etching is performed with respect to the silicon substrate 201. Here, for example, alkaline etchant, such as TMAH (TetraMethyl Ammonium Hydroxide) and KOH (Potassium Hydroxide), is used for the anisotropic etching. Here, the silicon substrate 201 has such a characteristic that the etching can be performed in the normal direction of the (100) surface (i.e. in a direction perpendicular to the silicon substrate 201 in FIG. 12A), but it is relatively difficult to perform the etching in the normal direction of the (111) surface (i.e. a direction having an angular difference of approximately 45 degrees with respect to the silicon substrate 201 in FIG. 12A). To perform the anisotropic etching by using this characteristic, the silicon substrate 201 is etched such that it has a shape corresponding to the projective portion 110 shown in FIGs. 1 (i.e. a projection shape or pyramid shape).

Incidentally, FIG. 12B is a b-b cross sectional view of the silicon substrate 201 etc. shown in FIG. 12A. The anisotropic etching is performed with respect to the silicon substrate 201, as shown in FIG. 12B, so that an etching rate is lower in the outer portion of the window of the silicon dioxide film 202, and the etching rate is higher in the central portion of the window. As a result, the tip portion of a hole formed by the etching has a sharp pointed shape.

Then, as shown in FIG. 13A, the silicon dioxide film 202 is removed by etching. At this time, the etching is performed such that the silicon dioxide film 202 formed on the surface of the portion which is bored by the isotropic etching out of the silicon substrate 201 is removed, while the silicon dioxide film 202 formed in the process in FIGs. 5 remains.

Incidentally, FIG. 13B is a b-b cross sectional view of the silicon substrate 201 etc. shown in FIG. 13A. As shown in FIG. 13B, the silicon dioxide film 202 formed on the surface of the portion which is bored by the isotropic etching out of the silicon substrate 201 is removed, while the silicon dioxide film 202 formed in the process in FIGs. 5 remains.

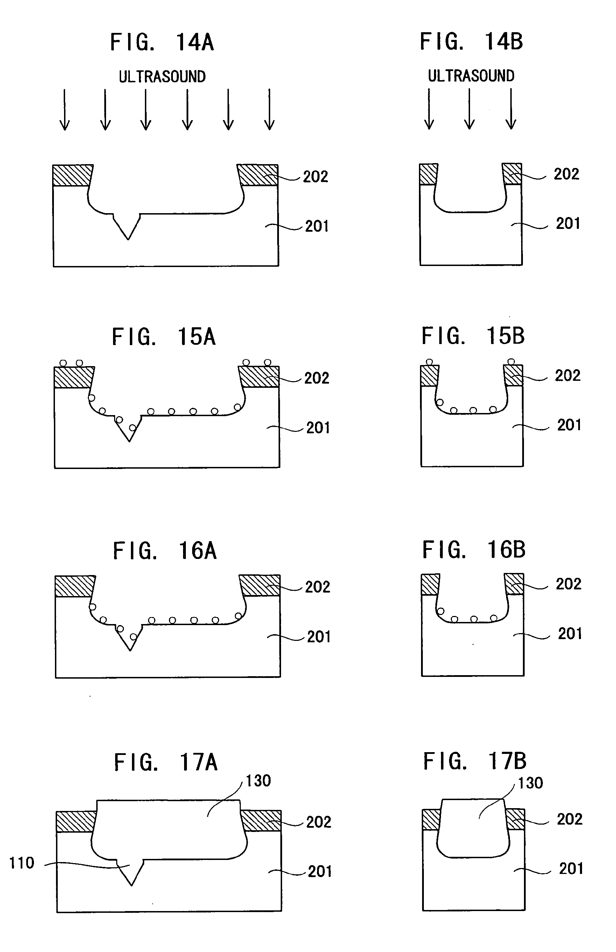

Then, as shown in FIG. 14A and FIG. 14B, which is a b-b cross sectional view of the silicon substrate 201 etc. associated with FIG. 14A, in methanol containing diamond powders, the surfaces of both the silicon substrate 201 and the silicon dioxide film 202 formed thereon are scratched, by vibrating the diamond powders by using ultrasound or the like, for example. By scratching the surfaces as described above, diamond nuclei can be formed in the following process (refer to FIGs. 15).

Then, as shown in FIG. 15A and FIG. 15B, which is a b-b cross sectional view of the silicon substrate 201 etc. associated with FIG. 15A, a diamond film is formed by Hot Filament CVD (Chemical Vapor Deposition). For example, using $CH_4$ (methane) gas as a material, the diamond film is formed on the silicon substrate 201. In particular, the diamond film grows at the position of the scratch which is made in the process in FIGs. 14. Incidentally, not only Hot Filament CVD, but also Microwave Plasma CVD or other film growth methods or the like may be used to grow the diamond film.

Moreover, the diamond film is used as the above-described projection portion 110, so that it needs to have electric conductivity. Therefore, B (Boron) is doped in the diamond film by adding a doping gas, such as $B_2H_6$ (diborane) and $(CH_3O)_3B$ (trimethoxy boron). Other doping gases may be used to add the electric conductivity to diamond.

Incidentally, the method of growing the diamond film is not limited to the one by the scratch process as shown in FIG. 14. The diamond film may be grown by applying a negative bias voltage to the silicon substrate 201 at the initial stage of the CVD process, or by applying ultra micro diamond powders to the silicon substrate 201, to thereby use the ultra micro diamond powders as the nuclei for growing the diamond film.

Then, as shown in FIG. 16A and FIG. 16B, which is a b-b cross sectional view of the silicon substrate 201 etc. associated with FIG. 16A, diamond particles which are growing on the silicon dioxide film 202 are removed. The removal of an extremely small amount of silicon dioxide film 202 by way of etching with BHF or the like can result in the removal of the diamond particles. By this, it is possible to form the projection portion 110 and the support member 130 which have appropriate shapes.

Then, as shown in FIG. 17A and FIG. 17B, which is a b-b cross sectional view of the silicon substrate 201 etc. associated with FIG. 17A, the diamond film is further grown by using Hot Filament CVD or the like, for example, to thereby form the projection portion 110 and the support member 130.

Incidentally, in this case, the support member 130 and the projection portion 110 are formed in one body, so that in the explanation below, the projection portion 110 shall include a function as the support member 130.

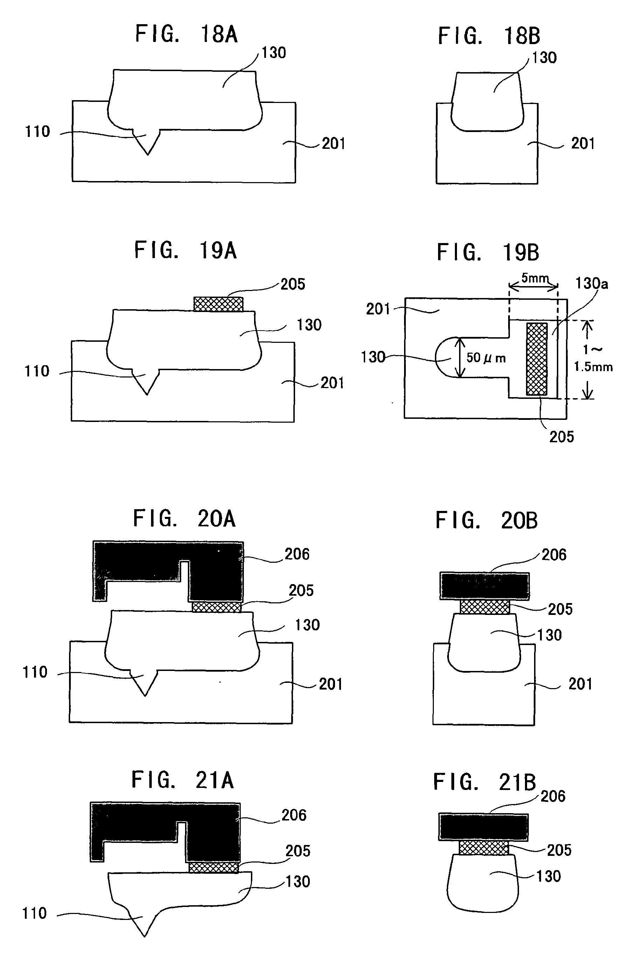

Then, after the projection portion 110 is formed, etching is performed, as shown in FIG. 18A and FIG. 18B, which is a b-b cross sectional view of the silicon substrate 201 etc. associated with FIG. 18A, and the silicon dioxide film 202 is removed. Here, for example, BHF or the like is used to remove the silicon dioxide film 202.

Then, as shown in FIG. 19A, photosensitive polyimide 205 is formed on a surface opposite to the side where the portion corresponding to the projection portion 110 is formed, in the portion corresponding to the support member 130 The photosensitive polyimide 205 is used for attachment to a glass 206 (refer to FIGs. 20) for supporting or maintaining the entire recording / reproducing head in a later process.

Incidentally, FIG. 19B shows the silicon substrate 201 etc. in FIG. 19A viewed from the direction c. As shown in FIG. 19B, the photosensitive polyimide 205 is patterned on a portion opposite to a portion extending in the longitudinal direction out of the portion corresponding to the support member 130 (i.e. on a support base 130a). This portion extending in the longitudinal direction corresponds to one specific example of the "mounted portion on which the projection portion is mounted " in the present invention. In addition, from the viewpoint of preventing the application of the unexpected electric field or the like more effectively, even the support base 130a may be also treated as one specific example of the "mounted portion on which the projection portion is mounted " in the present invention.

Incidentally, with respect to the specific size of the recording /reproducing head shown in FIG. 19B, the portion extending in the longitudinal direction is preferably 50 μm or less wide. Then, preferably, the portion opposite to the extending in the longitudinal direction is approximately 5 mm $\times$ 1 ~ 1.5 mm. However, they are not limited to the above size. With respect to the shape thereof, it is not limited to a T-shape as shown in FIG. 19B, but it may be other shapes such as a L-shape.

In this case, the support member 130 is unified with a support base 130a. The support base 130a is fixed, and the support member 130 is unified with the support base 130a such that the support member 130 can move (or wobble or oscillate) slightly as a cantilever in accordance with its elasticity. Even in this case, the support member 130 and the support base 130a may be collectively referred to as the support member 130.

Then, as shown in FIG. 20A and FIG. 20B, which is a b-b cross sectional view of the silicon substrate 201 etc. associated with FIG. 20A, the glass 206 to which a groove-cutting process is performed is attached to the photosensitive polyimide 205. The glass 206 is a member for supporting or maintaining the entire recording /reproducing head. By connecting an actuator or the like to the glass 206, it is possible to displace the recording / reproducing head on or above the dielectric recording medium, in the recording and reproduction operations of the dielectric recording / reproducing apparatus described later.

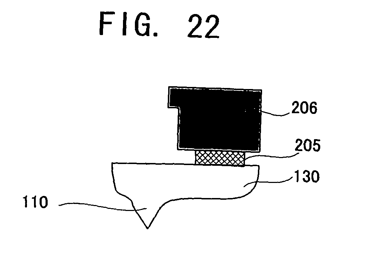

Moreover, the groove-cutting machining is performed to the glass 206, by forming a cut in the vicinity of the center of the glass 206. This is formed to easily break the glass 206 in a process described later (refer to FIG. 22).

Incidentally, the glass 206 is large enough to cover the whole projection portion 110. However, the size of the glass 206 shown in FIG. 20A and FIG. 20B is merely an example. Even if the glass 206 is larger than or smaller than this size, it is enough if it is large enough to support the entire recording / reproducing head.

Then, as shown in FIG. 21A and FIG. 21B, which is a b-b cross sectional view of the silicon substrate 201 etc. associated with FIG. 21A, the silicon substrate 201 is removed. Here, the silicon substrate 201 is removed from the projection portion 110 by using RIE (Reactive Ion Etching). However, other methods may be used to remove the silicon substrate 201.

Then, as shown in FIG. 22, the glass 206 is broken along the cut, to thereby complete the recording / reproducing head 100 (or 101) which can be used as the probe 11 described later.

(iii) Modified Examples of Recording / Reproducing Head

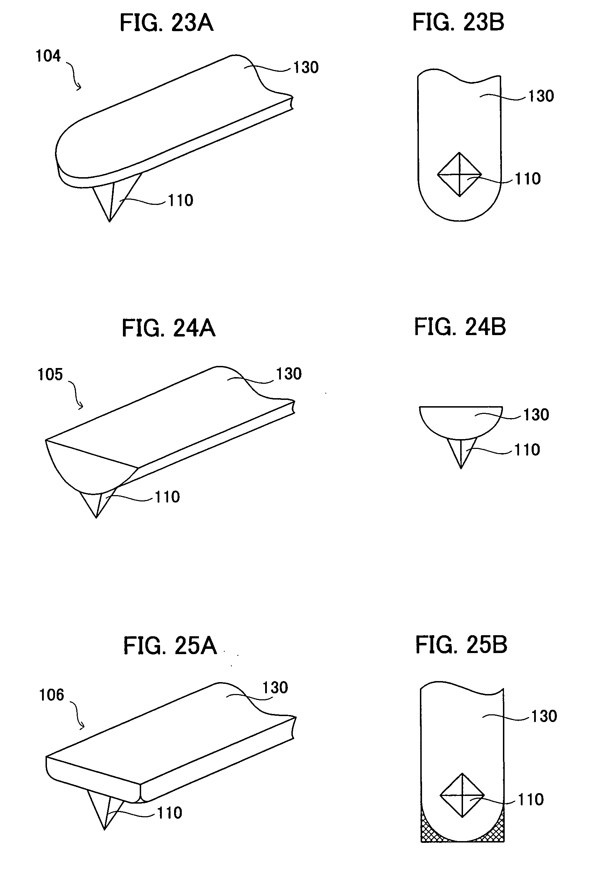

Then, with reference to FIGs. 23 and FIGs. 25, the modified example of the recording / reproducing head in the embodiment will be explained. FIGs. 23 and FIGs. 25 conceptually show structures of the recording / reproducing head in the modified examples.

As shown in FIG. 23A, a recording / reproducing head 104 whose end portion of the support member 130 is rounded may receive the above-described various benefits. Namely, even the recording /reproducing head 104 having such a shape that the angular part of the end portion is removed can inhibit or remove the application of the unexpected electric field or the like.

Incidentally, FIG. 23B shows the recording / reproducing head 104 from the bottom side. It shows that the end portion is rounded.

Moreover, as shown in FIG. 24A, a recording / reproducing head 105 whose front surface on the side facing the dielectric recording medium 20 is rounded may receive the above-described various benefits. Even such a recording / reproducing head 105 can inhibit or remove the application of the unexpected electric field or the like.

Incidentally, FIG. 24B is a cross sectional view of the recording / reproducing head 105. It shows that the front surface of the support member 130 on the side facing the dielectric recording medium 20 is rounded.

Moreover, as shown in FIG. 25A, even in such a recording /reproducing head 106 that portions corresponding to the tip angular parts or tip corners of the support member 130 on the side facing the dielectric recording medium 20 are rounded, it is possible to achieve a significant effect, from the viewpoint of preventing the concentration of the electric field, to thereby inhibit or remove the application of the unexpected electric field, or the like.

Incidentally, FIG. 25B shows the recording / reproducing head 106 viewed from the bottom side. It shows that the tip angular parts or tip corners of the support member 130 on the side facing the dielectric recording medium 20 are rounded and the upper side portion (i.e. the portion on the side not facing the dielectric recording medium 20) has an angular shape.

(2) Embodiment of Recording / Reproducing Apparatus

Next, the recoding / reproducing apparatus which uses the recording / reproducing head in the embodiment described above will be explained.

(i) Basic Structure

At first, the basic structure of the dielectric recording / reproducing apparatus in the embodiment will be explained with reference to FIG. 26. FIG. 26 conceptually shows the basic structure of the dielectric recording / reproducing apparatus in the embodiment.

The dielectric recording / reproducing apparatus 1 is provided with: the probe 11 for applying an electric field with its tip portion facing a dielectric material 17 of the dielectric recording medium 20; the return electrode 12 for returning the high-frequency electric field for reproduction applied from the probe 11; an inductor L placed between the probe 11 and the return electrode 12; an oscillator 13 which oscillates at a resonance frequency determined from the inductor L and a capacitance Cs in a portion formed in the dielectric material 17 under the probe 11 and polarized correspondingly to the record information; an alternating current (AC) signal generator 21 for applying an alternating electric field which is intended to detect the polarization condition recorded in the dielectric material 17; a record signal generator 22 for recording the polarization condition into the dielectric material 17; a switch 23 for switching outputs from the AC signal generator 21 and the record signal generator 22; a High Pass Filter (HPF) 24; a demodulator 30 for demodulating a FM signal modulated by the capacitance Cs corresponding to the polarization condition owned by the dielectric material 17 under the probe 11; a signal detector 34 for detecting data from the demodulated signal; and a tracking error detector 35 for detecting a tracking error signal from the demodulated signal.

The probe 11 is connected to the oscillator 13 via the HPF 24, and connected to the AC signal generator 21 and the record signal generator 22 via the HPF 24 and the switch 23. Incidentally, with respect to the probe 11, for example, a cantilever shape or a needle shape, as in FIGs. 1 and FIGs. 2, or the like is known as its specific shape.

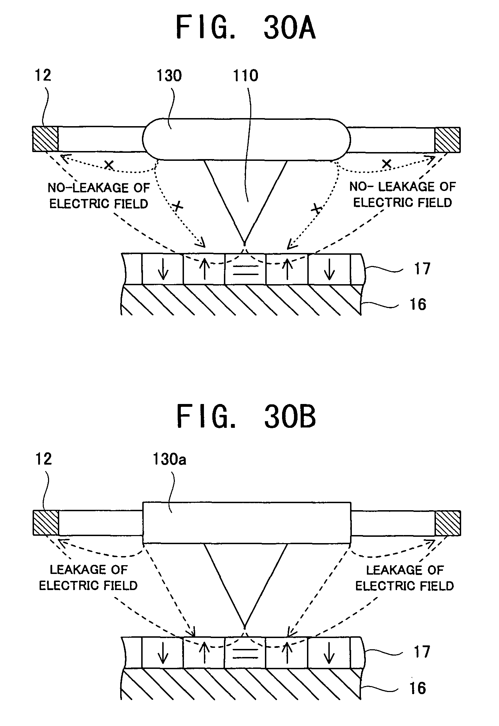

Particularly in the embodiment, as the probe 11, the recording / reproducing head 100 in the embodiment described above is used. Namely, the recording / reproducing head in which there is not an angular part on the support member 130 is used as the probe 11. By using such a recording / reproducing head 100 as the probe 11, it is possible to prevent the concentration of the electric field at the support member 130 and the application of the unexpected electric field or the like. The advantages will described in detail later (refer to FIGs. 30).

Incidentally, it is also possible that a plurality of probes 11 are provided. In this case, a plurality of AC signal generators 21 are preferably provided for the respective probes 11. Moreover, in order to distinguish, on the signal detector (detectors) 34, reproduction signal corresponding to each of a plurality of the AC signal generators 21, it is preferable that a plurality of signal detectors 34 are provided and that each of the signal detectors 34 obtains reference signal from the corresponding AC signal generator 21, to thereby output the corresponding reproduction signal.

The return electrode 12 is an electrode for returning the high-frequency electric field applied to the dielectric material 17 from the probe 11 (i.e. a resonance electric field from the oscillator 13), and is placed to surround the probe 11. Incidentally, the shape and placement of the return electrode 12 can be arbitrarily set as long as the high-frequency electric field can return to the return electrode 12.

The inductor L is placed between the probe 11 and the return electrode 12, and may be formed using a microstripline, for example. The inductor L and the capacitance Cs constitute the resonance circuit 14. The inductance of the inductor L is determined such that this resonance frequency is approximately 1 GHz, for example.

The oscillator 13 is an oscillator which oscillates at the resonance frequency determined from the inductor L and the capacitance Cs. The resonance frequency varies, depending on the change of the capacitance Cs. Therefore, FM modulation is performed correspondingly to the change of the capacitance Cs determined by the polarization domain corresponding to the recorded data. By demodulating this FM modulation signal, it is possible to read the data recorded in the dielectric recording medium 20.

Incidentally, as described in detail later, the probe 11, the return electrode 12, the oscillator 13, the inductor L, the HPF 24, and the capacitance Cs in the dielectric material 17 constitute the resonance circuit 14. The FM signal amplified on the oscillator 13 is outputted to the demodulator 30.

The AC signal generator 21 applies an alternating electric field to between the return electrode 12 and an electrode 16. The frequency of the alternating electric field is approximately 5kHz, and the alternating electric field is applied to the domain of the dielectric material 17. In the dielectric recording / reproducing apparatus having the plurality of proves 11, the frequencies of the alternating electric fields are used as reference signals in the signal detector (detectors) 34 to distinguish reproduction signals detected with the probes 11.

The record signal generator 22 generates a signal for recording (hereinafter referred to as a "record signal"), which is supplied to the probe 11 at the time of recording. This record signal is not limited to a digital signal but may be an analog signal. This record signal includes various signals, such as audio data, video data, and digital data for a computer. An AC signal which is superimposed to the record signal is used, as a reference signal in the reproduction operation, to distinguish and reproduce the reproduction signal of each probe 11.

The switch 23 selects its output to supply an AC signal (the alternating electric field) from the AC signal generator 21 at the time of reproducing, or a record signal from the record signal generator 22 at the time of recording, to the probe 11. A mechanical relay or a semiconductor circuit may be used for this device. In the case of the analog signal, the relay is preferably provided, and in the case of the digital signal, the semiconductor circuit is preferably provided.

The HPF 24 includes an inductor and a condenser. The HPF 24 is used to constitute a high pass filter for cutting off a signal system to prevent the signals obtained from the AC signal generator 21 and the record signal generator 22 from interfering with the oscillation of the oscillator 13. The cut-off frequency is $f=1/\{2\pi\sqrt{(LC)}\}$, wherein L is the inductance of the inductor included in the HPF 24, and C is the capacitance of the condenser included in the HPF 24. The frequency of the AC signal is approximately 5KHz, and the resonance frequency of the oscillator 13 is approximately 1GHz, so that the separation at a first LC filter can be performed sufficiently. A higher-order filter may be used, but since the number of elements increases, the size of the apparatus may be increased.

The demodulator 30 demodulates the resonance frequency of the oscillator 13, which is FM-modulated due to the small change of the capacitance Cs, and reconstructs a waveform corresponding to the polarized condition of a portion which is traced by the prove 11. If the recorded data are digital data of "0" and "1", there are two types of frequencies which are modulated, and the data is reproduced easily by distinguishing the frequencies.

The signal detector 34 reproduces the recorded data from the signal demodulated on the demodulator 30. A lock-in amplifier is used as the signal detector 34, for example, and synchronized detection is performed on the basis of the frequency of the alternating electric field of the AC signal generator 21, to thereby reproduce the data. Incidentally, it is obvious that other phase detection devices may be used.

The tracking error detector 35 detects a tracking error signal for controlling the apparatus (especially, tracking operation), from the signal demodulated on the demodulator 30. The detected tracking error signal is inputted into a tracking mechanism for the control.

Next, one example of the dielectric recording medium 20 shown in FIG. 26 will be explained with reference to FIG. 27A and FIG. 27B. FIG. 27A and FIG. 27B conceptually show one example of the dielectric recording medium 20 used in the embodiment.

As shown in FIG. 27A, the dielectric recording medium 20 is a disc-shaped dielectric recording medium, and is provided with: a center hole 10, an inner area 7, a record area 8, and an outer area 9. The inner area 7, the record area 8, and the outer area 9 are placed concentrically from the center hole 10 in this order. The center hole 10 is used in the case where the dielectric recording medium 20 is mounted on a spindle motor or the like.

The record area 8 is an area to record the data therein and has tracks and spaces between the tracks. Moreover, on the tracks and the spaces, such areas are provided that record therein control information associated with the record and reproduction. Furthermore, the inner area 7 and the outer area 9 are used to recognize the inner position and the outer position of the dielectric recording medium 20, respectively, and can be used as areas to record therein information about the data which is recorded, such as a title, its address, a recording time length, and a recording capacity. Incidentally, the above-described construction is one example of the dielectric recording medium 20, and other construction, such as a card-shape, can be also adopted.

Moreover, as shown in FIG. 27B, the dielectric recording medium 20 is formed such that the electrode 16 is laminated on a substrate 15 and that the dielectric material 17 is laminated on the electrode 16.

The substrate 15 is Si (silicon), for example, which is a preferable material in its strength, chemical stability, workability, or the like. The electrode 16 is intended to apply an electric field between the electrode 16 and the probe 11 (or the return electrode 12). By applying such an electric field to the dielectric material 17 that is greater than the coercive electric field of the dielectric material 17, the polarization direction is determined. By determining the polarization direction in accordance with the data, the record operation is performed.

The dielectric material 17 is formed by using a known technique, such as spattering method of $LiTaO_3$ or the like, which is a ferroelectric substance, onto the electrode 16. The record operation is performed with respect to such a Z surface of LiTaO3 that the plus and minus surfaces of the polarization have a 180-degree domain relationship. It is obvious that other dielectric materials may be used. The dielectric material 17 forms the small polarization at high speed by using a direct current bias voltage and a voltage for the data which are both applied at the same time.

Alternatively, as the shape of the dielectric recoding medium 20, for example, there are a disc shape and a card shape and the like. The displacement of the relative position with the probe 11 is performed by the rotation of the dielectric recording medium 20, or by displacing linearly either the probe 11 or the dielectric recording medium 20.

(ii) Operation Principle

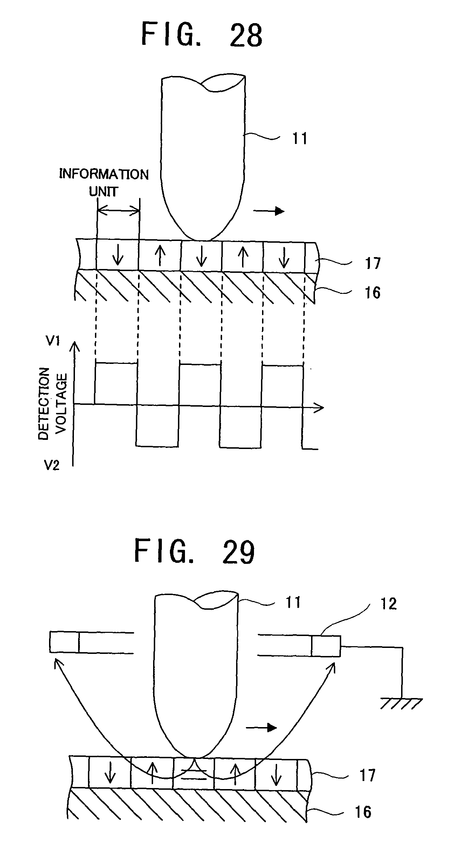

Next, with reference to FIG. 28 and FIGs. 30, the operation principle of the dielectric recording / reproducing apparatus 1 in the embodiment will be explained. Incidentally, in the explanation below, a part of the constituent elements of the dielectric recoding /reproducing apparatus 1 shown in FIG. 26 is extracted and explained.

(Record Operation)

At first, with reference to FIG. 28, the record operation of the dielectric recording / reproducing apparatus 1 in the embodiment will be explained. FIG. 28 conceptually shows the record operation of recording the information.

As shown in FIG. 28, by applying an electric field which is greater than the coercive electric field of the dielectric material 17 to between the probe 11 and the electrode 16, the dielectric material 17 is polarized having directions corresponding to the direction of the applied electric field. Then, by controlling an applied voltage (an applied electric field) to change the polarization direction, it is possible to record predetermined information. This uses such a characteristic that the polarization direction is reversed when an electric field greater than the coercive electric field of a dielectric substance (particularly, a ferroelectric substance) is applied to the dielectric substance and that the polarization direction is maintained after stopping applying the electric field.

For example, it is assumed that the domains have a downward polarization P when an electric field is applied from the probe 11 to the electrode 16, and that the domains have an upward polarization P when an electric field is applied from the electrode 16 to the probe 11. This corresponds to a condition where the information is recorded. If the probe 11 is moved in a direction shown with the arrow, a detection voltage is outputted as a rectangular wave having a high level or a low level (i.e. the digital signal), correspondingly to the polarization P. Incidentally, this level varies depending on the extent of the polarization P, to thereby allow the recording as the analog signal.

(Reproduction Operation)

Next, with reference to FIG. 29, the reproduction operation of the dielectric recording / reproducing apparatus 1 in the embodiment will be explained. FIG. 29 conceptually shows the reproduction operation of reproducing the information.

The non-linear dielectric constant of a dielectric substance changes correspondingly to the polarization direction of the dielectric substance. The non-linear dielectric constant of the dielectric substance can be detected as a difference in the capacitance of the dielectric substance or a difference in the change of the capacitance, when an electric field is applied to the dielectric substance. Therefore, by applying an electric field to a dielectric material and detecting, at that time, a difference in the capacitance Cs or a difference in the change of the capacitance Cs in a certain domain of the dielectric material, it is possible to read and reproduce the data recorded as the polarization direction of the dielectric material.

Specifically, at first, as shown in FIG. 29, an alternating electric field from the not-illustrated AC signal generator 21 is applied to between the electrode 16 and the probe 11. The alternating electric field has such an electric field strength that is not beyond the coercive electric field of the dielectric material 17, and has a frequency of approximately 5kHz, for example. The alternating electric field is generated mainly to distinguish the difference in the change of the capacitance corresponding to the polarization direction of the dielectric material 17. Incidentally, in place of the alternating electric field, a direct current bias voltage may be applied to form an electric field in the dielectric material 17. The application of the alternating electric field causes the generation of an electric field in the dielectric material 17 of the dielectric recording medium 20.

Then, the probe 11 is approached to the recording surface until the distance between the tip of the probe 11 and the recording surface becomes extremely small on the order of nanometers. Under this condition, the oscillator 13 is driven. Incidentally, in order to detect the capacitance Cs of the dielectric material 17 under the probe 11 highly accurately, it is preferable to contact the probe 11 with the surface of the dielectric material 17, i.e. the recording surface. However, in order to read the data recorded in the dielectric material 17 at high speed, it is necessary to relatively displace the probe 11 on the dielectric recording medium 20 at high speed. Thus, in view of reliability in the high-speed displacement, and the prevention of damage caused by the collision and friction between the probe 11 and the dielectric recording medium 20, or the like, it is practically better to make the probe 11 approach the recording surface close enough to regard this as the actual contact (substantially contact), than make the probe 11 contact the recording surface.

Then, the oscillator 13 oscillates at the resonance frequency of the resonance circuit, which includes the inductor L and the capacitance Cs associated with the dielectric material 17 under the probe 11 as the constituent factors. The central frequency of the resonance frequency is set to approximately 1GHz, as described above.

Here, the return electrode 12 and the probe 11 constitute a part of the resonance circuit 14 including the oscillator 13. The high-frequency signal of approximately 1GHz, which is applied to the dielectric material 17 from the probe 11, passes through the dielectric material 17 and returns to the return electrode 12, as shown with solid lines in FIG. 29. By placing the return electrode 12 in the vicinity of the probe 11 and shortening a feedback route to the resonance circuit 14 including the oscillator 13, it is possible to reduce a chance of noise (e. g. floating capacitance) entering the resonance circuit 14.

In addition, the change of the capacitance Cs corresponding to the non-linear dielectric constant of the dielectric material 17 is extremely small, and in order to detect this change, it is necessary to adopt a detection method having high detection accuracy. In a detection method using FM modulation, generally, it is possible to achieve the high detection accuracy, but it is necessary to further improve the detection accuracy to likely detect the small capacitance change corresponding to the non-linear dielectric constant of the dielectric material 17. Thus, in the dielectric recording /reproducing apparatus 1 in the embodiment (i.e. a recording /reproducing apparatus which uses the SNDM principle), the return electrode 12 is placed in the vicinity of the probe 11 to shorten the feedback route (the feedback path) to the resonance circuit 14 as much as possible. By this, it is possible to obtain extremely high detection accuracy, and thus it is possible to detect the small capacitance change corresponding to the non-linear dielectric constant of the dielectric substance.

After the oscillator 13 is driven, the probe 11 is displaced in parallel with the recording surface on the dielectric recording medium 20. By the displacement, the domain of the dielectric material 17 under the probe 11 is changed, and whenever its polarization direction changes, the capacitance Cs changes. If the capacitance Cs changes, the resonance frequency (the oscillation frequency) of the oscillator 13 changes. As a result, the oscillator 13 outputs a signal which is FM-modulated on the basis of the change of the capacitance Cs.

This FM signal is frequency-voltage converted by the demodulator 30. As a result, the change of the capacitance Cs is converted to the change of a voltage. The change of the capacitance Cs corresponds to the non-linear dielectric constant of the dielectric material 17. The non-linear dielectric constant corresponds to the polarization direction of the dielectric material 17. The polarization direction corresponds to the data recorded in the dielectric material 17. Therefore, a signal obtained from the demodulator 30 is a signal whose voltage changes correspondingly to the data recorded in the dielectric recording medium 20. Moreover, the signal obtained from the demodulator 30 is supplied to the signal detector 34, and the data recorded in the dielectric recording medium 20 is extracted by the synchronized detection, for example.

At this time, in the signal detector 34, the AC signal generated by the AC signal generator 21 is used as a reference signal. This makes it possible to extract the data highly accurately by referring the reference signal (i.e. synchronizing with the reference signal), as described above, even if the signal obtained from the demodulator 30 includes much noise or the data to be extracted is weak, for example.

Particularly in the embodiment, the recording / reproducing head 100 is used as the probe 11 to perform the above-described record and reproduction operations. Therefore, as described above, it is possible to prevent the concentration of the electric field from occurring at the support member 130. By this, as shown in FIG. 30A, it is possible to inhibit or remove the application of the unexpected electric field (i.e. a leakage of the electric field) or the like from the support member 130 to the return electrode 12 and the dielectric recording medium 20. Therefore, it is possible to appropriately apply a high-frequency electric field and an alternating electric field upon the reproduction, and a pulse electric field upon the recording, from the probe 11 to the dielectric recording medium 20.

If, as shown in FIG. 30B, the probe having the angular support member 130a is used to perform the above-described record and reproduction operations, there is a possibility that the concentration of the electric field occurs, especially at the angular parts or corners of the support member 130a. The concentration of the electric field causes the leakage of the electric field to the outside of the support member 130a. The leakage of the electric field (the unexpected electric field) could be likely applied between the support member 130a and the return electrode 12 or the dielectric recording medium 20. Such application of the unexpected electric field may cause the resonance of the resonance circuit 14 to be disturbed or may cause the application of a stable alternating electric field to be prevented.

However, in the embodiment, it is possible to effectively prevent the concentration of the electric field at the support member 130, the application of the unexpected discharge, or the like, so that it is possible to stabilize the record and reproduction operations, and it is possible to increase reliability as the dielectric recording /reproducing apparatus 1.

Moreover, in the construction such as a multi-probe having a plurality of recording / reproducing heads, it is possible to inhibit or remove the application of unexpected electric fields or the like from the support member 130 in one recording / reproducing head to the projection portions 110 and the support members 130 in the adjacent recording / reproducing heads, in addition to receiving the above-described various benefits. Therefore, it is possible to effectively prevent the application of noise, such as crosstalk, to thereby stabilize the appropriate record and reproduction of the information.

Furthermore, in the above embodiment, the dielectric material 17 is used as a recording layer, but from the viewpoint of the presence or absence of spontaneous polarization and the non-linear dielectric constant, the dielectric material 17 is preferably a ferroelectric substance.

## Claims

1. A recording / reproducing head (100) for performing at least one of a record operation of recording information onto a dielectric recording medium (20) and a reproduction operation of reproducing the information from the dielectric recording medium (20), **characterized in that** said recording / reproducing head (100) comprises:

   a support member (130) which extends in a longitudinal direction; and
   a projection portion (110) which is mounted on said support member (130) such that a tip of said projection portion (110) faces the dielectric recording medium (20),

   said support member (130) having a rounded shape at a surface thereof on a side facing the dielectric recording medium (20), at least in a mounted portion on which said projection portion (110) is mounted.

2. The recording / reproducing head (100) according to claim 1, **characterized in that** said support member (130) has a relatively rounded shape at the surface thereof on the side facing the dielectric recording medium (20), as compared with a shape at an another surface thereof on an another side not facing the dielectric recording medium (20), at least in the mounted portion on which said projection portion (110) is mounted.

3. The recording / reproducing head (100) according to claim 1 or 2, **characterized in that** said support member (130) has a prism shape obtained by a chamfer process with respect to corners thereof on the side facing the dielectric recording medium (20), at least in the mounted portion on which said projection portion (110) is mounted.

4. The recording / reproducing head (100) according to any one of claims 1 to 3, **characterized in that** said support member (130) has a rounded shape at a surface thereof on an opposite side to the side facing the dielectric recording medium (20), or has a prism shape obtained by a chamfer process with respect to corners thereof on the opposite side, at least in the mounted portion on which said projection portion (110) is mounted.

5. The recording / reproducing head (100) according to any one of claims 1 to 4, **characterized in that** if a distance between said support member (130) and the dielectric recording medium (20) is h, a radius of the rounded shape is greater than or equal to h/10.

6. A recording / reproducing head (100) for performing at least one of a record operation of recording information onto a dielectric recording medium (20) and a reproduction operation of reproducing the information from the dielectric recording medium (20), **characterized in that** said recording / reproducing head (100) comprises:

   a support member (130) which extends in a longitudinal direction; and
   a projection portion (110) which is mounted on said support member (130) such that a tip of said projection portion (110) faces the dielectric recording medium (20),

   said support member (130) having a relatively rounded shape at a mounted portion on which said projection portion (110) is mounted, as compared with a shape at an other portion of said support member (130) except the mounted portion.

7. The recording / reproducing head (100) according to claim 6, **characterized in that** said support member (130) has a prism shape obtained by a chamfer process with respect to corners thereof, in the mounted portion on which said projection portion (110) is mounted.

8. A recording / reproducing head (100) for performing at least one of a record operation of recording information onto a dielectric recording medium (20) and a reproduction operation of reproducing the information from the dielectric recording medium (20), **characterized in that** said recording / reproducing head (100) comprises:

   a support member (130) which extends in a longitudinal direction; and
   a projection portion (110) which is mounted on said support member (130) such that a tip of said projection portion (110) faces the dielectric recording medium (20),

   said support member (130) having a rounded shape at an inhibition portion where application of an electric field between said support member (130) and the dielectric recording medium (20) is to be inhibited.

9. The recording / reproducing head (100) according to claim 8, **characterized in that** the inhibition portion includes a surface of said support member (130) on a side facing the dielectric recording medium (20).

10. The recording / reproducing head (100) according to claim 8 or 9, **characterized in that** the inhibition portion includes a surface of said support member (130) on a side facing a return electrode (12), a high-frequency electric field being applied between the return electrode (12) and said recording / reproducing head (100).

11. The recording / reproducing head (100) according to any one of claims 8 to 10, **characterized in that** if a distance between said support member (130) and a portion where the electric field is possibly applied to said support member (130) is h, a radius of the rounded shape is greater than or equal to h/10.

12. A recording / reproducing head array **characterized in that** said recording / reproducing head array comprises:

    a plurality of said recording / reproducing heads (100) according to any one of claims 1 to 11,

    said support member (130) of at least one of the plurality of said recording /reproducing heads (100) further having the rounded shape at a surface thereof on a side facing adjacent recording /reproducing head(s) (100).

13. A production method of producing a recording / reproducing head (100) according to any one of claims 1 to 11,
    **characterized in that** said production method comprises:

    a mold-forming process of forming a mold for forming said projection portion (110) and said support member (130); and
    a member-forming process of forming said projection portion (110) and said support member (130) by using the formed mold,

    the mold being formed such that, out of the mold, a portion for forming said support member (130) has a shape corresponding to the rounded shape, in said mold-forming process.

14. The production method according to claim 13, **characterized in that** the mold having the shape corresponding to the rounded shape is formed by performing isotropic etching in said mold-forming process.

15. The production method according to claim 13 or 14, **characterized in that** the mold having the shape corresponding to the rounded shape is formed by rounding a masking shape of a photoresist in said mold-forming process.

16. The production method according to any one of claims 13 to 15, **characterized in that** the mold, having a portion for forming the projection portion (110), is formed by using a silicon (100) substrate as the mold and by performing anisotropic etching with respect to the silicon substrate, in said mold-forming process.

17. The production method according to any one of claims 13 to 16, **characterized in that** the support member (130) having the rounded shape is formed by ion irradiation, in said member-forming process.

18. A recording apparatus (1) for recording information onto a dielectric recording medium (20),
    **characterized in that** said recording apparatus (1) comprises:

    a recording / reproducing head (100) according to any one of claims 1 to 11; and
    a record signal generating device (22) for generating a record signal corresponding to the information.

19. A reproducing apparatus (1) for reproducing information recorded on a dielectric recording medium (20),
    **characterized in that** said reproducing apparatus (1) comprises:

    a recording / reproducing head (100) according to any one of claims 1 to 11;
    an electric field applying device (21) for applying an electric field to the dielectric recording medium (20);
    an oscillating device (13) whose oscillation frequency varies depending on a difference in a capacitance (Cs) corresponding to a non-linear dielectric constant of the dielectric recording medium (20); and
    a reproducing device (34) for demodulating and reproducing an oscillation signal from said oscillating device (13).

# FIG. 1A

100

130

130

130

110

# FIG. 1B

101

130

130

130

110

# FIG. 2A

102

130

130

130

110

# FIG. 2B

103

130

130

110

# FIG. 3

FIG. 4

FIG. 5

FIG. 6A

FIG. 6B

FIG. 7A

FIG. 7B

FIG. 8A

FIG. 8B

24

FIG. 9A

t₂
t₁
— 202
— 201
— 202

FIG. 9B

— 202
— 201
— 202

FIG. 10A

— 203
— 202
— 201
— 202

FIG. 10B

— 203
— 202
— 201
— 202

FIG. 11A

— 202
— 201

FIG. 11B

— 202
— 201

FIG. 12A

— 202
— 201

FIG. 12B

— 202
— 201

FIG. 13A

— 202
— 201

FIG. 13B

— 202
— 201

FIG. 14A

ULTRASOUND

~202

~201

FIG. 14B

ULTRASOUND

~202

~201

FIG. 15A

~202

~201

FIG. 15B

~202

~201

FIG. 16A

~202

~201

FIG. 16B

~202

~201

FIG. 17A

130

~202

110

~201

FIG. 17B

130

~202

~201

FIG. 18A

130
110
201

FIG. 18B

130
201

FIG. 19A

205
130
110
201

FIG. 19B

5mm
130a
201
130
50μm
1~
1.5mm
205

FIG. 20A

206
205
130
110
201

FIG. 20B

206
205
130
201

FIG. 21A

206
205
130
110

FIG. 21B
206
205
130

# FIG. 22

206

205

130

110

## FIG. 23A

104
130
110

## FIG. 23B

130
110

## FIG. 24A

105
130
110

## FIG. 24B

130
110

## FIG. 25A

106
130
110

## FIG. 25B

130
110

# FIG. 26

TRACKING ERROR SIGNAL

TRACKING ERROR DETECTOR — 35

OUTPUT

SIGNAL DETECTOR

34

DEMODUL-ATOR

30

OSCILLA-TOR

13

14

23

24

L

21

RECORD SIGNAL GENERATOR

22

12  130  11

110

17
16   } 20
15

Cs

EP 1 533 804 A1

# FIG. 27A

20

10

7

A ——— A

8

9

# FIG. 27B

10 7 8 9

17

16

15

# FIG. 28

INFORMATION UNIT

11

17

16

V1

DETECTION VOLTAGE

V2

# FIG. 29

11

12

17

16

# FIG. 30A

12          130          110

NO-LEAKAGE OF
ELECTRIC FIELD

NO- LEAKAGE OF
ELECTRIC FIELD

17

16

# FIG. 30B

12          130a

LEAKAGE OF
ELECTRIC FIELD

LEAKAGE OF
ELECTRIC FIELD

17

16

**European Patent Office**

**EUROPEAN SEARCH REPORT**

Application Number

EP 04 02 7531

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2 872 529 A (HOLLMANN HANS E ET AL) 3 February 1959 (1959-02-03) <br><br> * the whole document * <br> ----- | 1,2,4,6, 8,9,18, 19 | G11B9/08 G11B11/08 |
| A | US 1 926 406 A (RIEBER FRANK) 12 September 1933 (1933-09-12) * the whole document * <br> ----- | 1,2,6, 8-10,18 | |
| A | WO 03/023423 A (PIONEER CORPORATION; CHO, YASUO; ONOE, ATSUSHI) 20 March 2003 (2003-03-20) * claims 11-20 * <br> ----- | 1,6,8, 12,18,19 | |
| A | EP 0 480 645 A (CANON KABUSHIKI KAISHA) 15 April 1992 (1992-04-15) * column 16, line 49 - column 17, line 10; figures 7-11 * <br> ----- | 1,12 | |
| A | US 4 489 278 A (SAWAZAKI ET AL) 18 December 1984 (1984-12-18) * column 4, line 11 - line 28; figure 5 * <br> ----- | 1,19 | TECHNICAL FIELDS SEARCHED (Int.Cl.7) <br><br> G11B |
| A | US 5 546 375 A (SHIMADA ET AL) 13 August 1996 (1996-08-13) * the whole document * <br> ----- | 13,16 | |
| A | US 5 360 978 A (GUERET ET AL) 1 November 1994 (1994-11-01) * column 5, line 29 - column 6, line 25; figures 5-11 * <br> ----- | 13 | |
| A | US 5 471 064 A (KOYANAGI ET AL) 28 November 1995 (1995-11-28) * column 3, line 56 - line 59 * <br> ----- | | |
|  | -/-- | | |

The present search report has been drawn up for all claims

| Place of search | Date of completion of the search | Examiner |
|---|---|---|
| The Hague | 1 March 2005 | Fux, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 04 02 7531

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 00/36608 A (LAZERUS NANO TECHNOLOGIES) 22 June 2000 (2000-06-22) * page 52, line 10 - line 17 * * page 66, line 5 - line 6 * ----- | | |
| A | US 5 923 637 A (SHIMADA ET AL) 13 July 1999 (1999-07-13) * figures 3b,3c * ----- | | |
| A | US 6 163 519 A (KURODA ET AL) 19 December 2000 (2000-12-19) * column 3, line 59 - column 4, line 8; figures 3A-3D * ----- | | |

TECHNICAL FIELDS
SEARCHED (Int.Cl.7)

The present search report has been drawn up for all claims

| Place of search | Date of completion of the search | Examiner |
|---|---|---|
| The Hague | 1 March 2005 | Fux, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 02 7531

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2005

| Patent document cited in search report | | Publication date | Patent family member(s) | | Publication date |
|---|---|---|---|---|---|
| US 2872529 | A | 03-02-1959 | NONE | | |
| US 1926406 | A | 12-09-1933 | NONE | | |
| WO 03023423 | A | 20-03-2003 | EP | 1435003 A2 | 07-07-2004 |
| | | | WO | 03023423 A2 | 20-03-2003 |
| | | | US | 2004263185 A1 | 30-12-2004 |
| EP 0480645 | A | 15-04-1992 | JP | 2741629 B2 | 22-04-1998 |
| | | | JP | 4147448 A | 20-05-1992 |
| | | | AT | 147858 T | 15-02-1997 |
| | | | CA | 2052882 A1 | 10-04-1992 |
| | | | DE | 69124181 D1 | 27-02-1997 |
| | | | DE | 69124181 T2 | 30-04-1997 |
| | | | EP | 0480645 A1 | 15-04-1992 |
| | | | US | 5321685 A | 14-06-1994 |
| US 4489278 | A | 18-12-1984 | NONE | | |
| US 5546375 | A | 13-08-1996 | JP | 3218414 B2 | 15-10-2001 |
| | | | JP | 6084455 A | 25-03-1994 |
| US 5360978 | A | 01-11-1994 | EP | 0530427 A1 | 10-03-1993 |
| | | | DE | 69114492 D1 | 14-12-1995 |
| | | | DE | 69114492 T2 | 20-06-1996 |
| US 5471064 | A | 28-11-1995 | JP | 6096714 A | 08-04-1994 |
| | | | US | 5627815 A | 06-05-1997 |
| WO 0036608 | A | 22-06-2000 | EP | 1151437 A2 | 07-11-2001 |
| | | | JP | 2004518235 T | 17-06-2004 |
| | | | WO | 0036608 A2 | 22-06-2000 |
| US 5923637 | A | 13-07-1999 | JP | 9257811 A | 03-10-1997 |
| | | | EP | 0786642 A1 | 30-07-1997 |
| US 6163519 | A | 19-12-2000 | JP | 9269329 A | 14-10-1997 |
| | | | US | 6046972 A | 04-04-2000 |

EPO FORM P0459

For more details about this annex : see Official Journal of the European Patent Office, No. 12/82